# EUROPEAN PATENT APPLICATION

(11) **EP 2 711 650 A1**
(43) Date of publication of application: **26.03.2014**
(21) Application number: 12185859.1
(22) Date of filing: 25.09.2012
(51) Int. Cl.: F24J 2/07

(54) **Arrangement for concentrated solar power energy conversion**

(71) Applicant: Siemens Aktiengesellschaft, 80333 München (DE)
(72) Inventor: Dahlquist, Adrian, 61238 Finspang (SE); Näs, Lennart, 60210 Norrköping (SE); Sjödin, Mats, 612 33 Finspong (SE)

(57) **Abstract**

The invention relates to an Arrangement for concentrated solar power energy conversion comprising a receiving tower (RT) founded on a ground level (GL), at least one receiver (R) attached to said receiving tower (RT) in a receiving height (RH) above said ground level (GL), further comprising at least one ground station (GS) positioned on ground level (GL), wherein said receiver (R) comprises at least one solar collector (SC) made to receive concentrated sunlight, wherein said solar collector (SC) comprises a heat exchanger (HE) exchanging heat with a process fluid (PF) to be heated up. In order to avoid the costs of installing high temperature suitable piping from the top receiver down to ground level it is proposed that said receiver comprises at least one top compressor (TC) to compress said process fluid (PF) before it enters said heat exchanger (HE), wherein said receiver comprises at least one top compressor driving unit (TCDU) driving said top compressor (TC), wherein said ground station (GS) comprises at least one ground turbine (GT) driving a driven unit (DU), wherein said ground station (GS) receives said process fluid (PF) from said receiver (R) to be expanded in said ground turbine (GT).

## Description

The invention relates to an arrangement for concentrated solar power energy conversion comprising a receiver tower founded on a ground level, at least one receiver attached to said receiver tower in a receiving height above said ground level, further comprising at least one ground station positioned on ground level, wherein said receiver comprises at least one solar collector designed to receive concentrated sunlight, wherein said solar collector comprises a heat exchanger exchanging heat with a process fluid to be heated up.

Equipment for transformation of solar energy from concentrated solar power plants where solar receivers are utilized for heating pressurized air or any other process fluid generated from compressors or pumps are known in various embodiments. Some of these embodiments use gas turbines generating electric power by expanding the compressed air after it has been heated in the receivers through a turbine driving the compressor and a generator in order to generate net electric power output.

Usually central receiver concentration systems use an array of mirrors and/or lenses to focus incoming radiation onto centrally positioned receivers, which are in most cases mounted at the top of a tower. These mirrors are called heliostats. These heliostats are individually tracking the sun allowing great flexibility in the size and position of the concentration system. The solar energy to be collected is transmitted optically to a small central collection region in the tower also called receiver.

Although the mirrors are placed individually in a central receiver power plant, the overall effect of the heliostats field closely resembles a three dimensional concentration. Concentration ratios of the order of 500 - 2000 have been demonstrated. At these levels output temperatures of 1000°C can easily be obtained using a central receiver system. The angle of incidence of the beam radiation on the collector is of great importance and as such the concentration system must constantly track the sun to maintain a correct alignment. The high outlet temperature of the media respectively process fluid generated in a central receiver must be utilized in some sort of energy transformation process suitable to generate electric power from high temperature fluid.

A gas turbine is a suitable transformer but the configuration of a gas turbine in the receiver installation is limited by the weight of the gas turbine unit preventing large engines from being installed closed to the receiver up in the tower due to the high loads on the tower. If the gas turbine is installed on the ground close to the base of the tower the connection between the receivers in the top of the tower and the gas turbine on ground level is generating a very long hot gas pipe that will have to be made of expensive materials, generates additional pressure loss and limits the working media temperature.

It is therefore one object of the invention to use preferably the full temperature potential of the concentrated solar power plant avoiding the costs of installing high temperature suitable piping from the top receiver down to ground level and further avoiding the necessity to install a tower suitable for carrying complete turbine equipment including a generator.

In order to solve the above problems the invention proposes an arrangement of the incipiently mentioned type further comprising the additional features of the characterizing portion of claim 1. The dependent claims relate to preferred embodiments of the invention.

The underlying idea of the invention is to split the full compression and expansion step of a Clausius Rankine or more preferred a Brayton Cycle using the sun energy collected such that some hardware of that cycle can be located on a ground level and other parts of the equipment of the cycle can be positioned at a receiving height of said receiving tower above ground level.

One essential advantage of the invention is that heavy and sensitive equipment such as a generator can be located on the ground level and not on the receiving level enabling a cheaper and lighter tower design. Compared to equipment, where the hole compressor and turbine set up is located on ground level expensive piping can be saved by the invention and pressure loss can be reduced.

Further the invention enables bigger sized turbine equipment compared to a set up where turbine equipment is completely located on the tower top at receiving level.

While the location of the compressor according to the invention on receiving level of the tower goes along already with several advantages mentioned the invention enables further benefits by using a second turbine as the top compressor driving unit which already reduces process fluid parameters before said process fluid enters a piping leading said process fluid from receiving level down to ground level.

While said ground turbine and said second turbine driving said compressor respectively pump can be a steam turbine the preferred embodiment provides a gas turbine as said ground turbine. Further said top compressor driving unit is preferably a gas turbine.

A preferred application of the invention revealing further advantages is the generation of electrical energy, wherein said driven unit mechanically connected to said ground turbine is an electric generator.

Further advantages can be obtained when said ground station further comprises a first compressor compressing said process fluid before it enters said top compressor. Consequently this configuration results in a low pressure spool on ground level and a high pressure spool on receiver level. The high pressure spool by nature is build smaller and therefore has a lower mass to be supported by said tower. The low pressure spool can be build without significant volume constraines as large as its needs to be. Said first compressor is preferably driven by said ground turbine respectively mechanically connected in a driving manner.

Another preferred embodiment of the invention provides said receiving tower with a second receiver attached to said receiving tower at a second receiving height above ground level comprising second solar collectors wherein said second solar collectors comprises a second heat exchanger exchanging heat with said process fluid after said process fluid was expanded in said second turbine before entering said ground turbine. That way the second receiver works basically like a conventional re-heater for the twin shaft turbine consisting of said top turbine and said ground turbine.

The above mentioned attributes and other features and the advantages of this invention and the manner of obtaining them will become more apparent and the invention itself will be better understood by reference to the following description of a currently best mode of carrying out the invention taken in conjunction with the accompanying drawings, wherein
- Figure 1: shows a conventional concentrating solar power application schematically depicted partly in cross section,
- Figure 2 - 5: respectively showing a schematically depiction of an arrangement for concentrated solar power energy conversion according to the invention depicted partly in cross section.

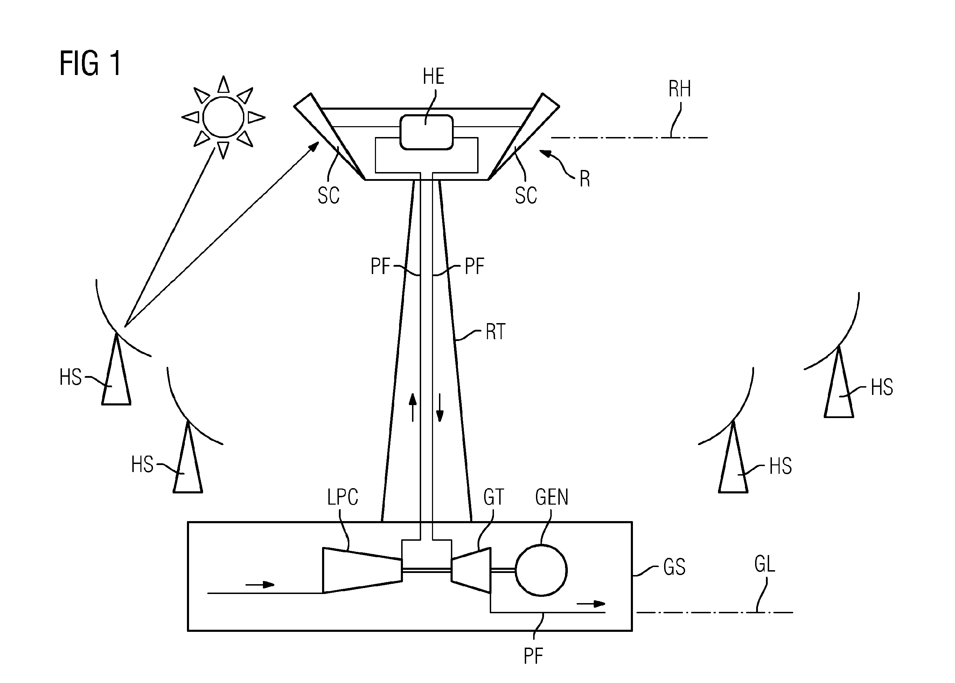

Figures 1 to 5 respectively show an arrangement for concentrated solar power energy conversion of the incipiently mentioned type. All these arrangements are depicted together with heliostats HS collecting, focusing and directing incoming sun beam to a receiver R of a receiving tower RT. The heliostats HS constantly track the sun according to the angle of incidence of the beam radiation to direct and focus the sunbeam to the receiver R.

Said receiving tower RT is founded on a ground level GL and a receiver R is attached to said receiving tower RT in a receiving height RH above said ground level GL. Said receiver is made to receive concentrated sunlight from said heliostats HS. On ground level a ground station GS is provided, wherein said receiver R and said ground station GS both comprise components for the intended concentrated solar power energy conversion.

Said receiver R comprises several solar collectors, which are connected to at least one heat exchanger HE exchanging heat with a process fluid PF circulating and heating up in said heat exchanger HE.

Conventionally as depicted in figure 1 a compressor CO located on ground level GL compresses said process fluid PF, which is conducted to said heat exchanger HE in the receiver R, increased in temperature and further conducted down again to ground level GL to be expanded in a ground turbine GT, which is a gas turbine. Said ground turbine GT is mechanically connected and driving a generator GEN also located on ground level.

The most important disadvantage of the conventional arrangement is the necessity of a long piping conducting said process fluid PF from ground level GL up to the receiver R and especially again down to the ground level GL, wherein the downwards conduction requires a high temperature resistant piping due to temperatures of about 1000°C of the process fluid PF.

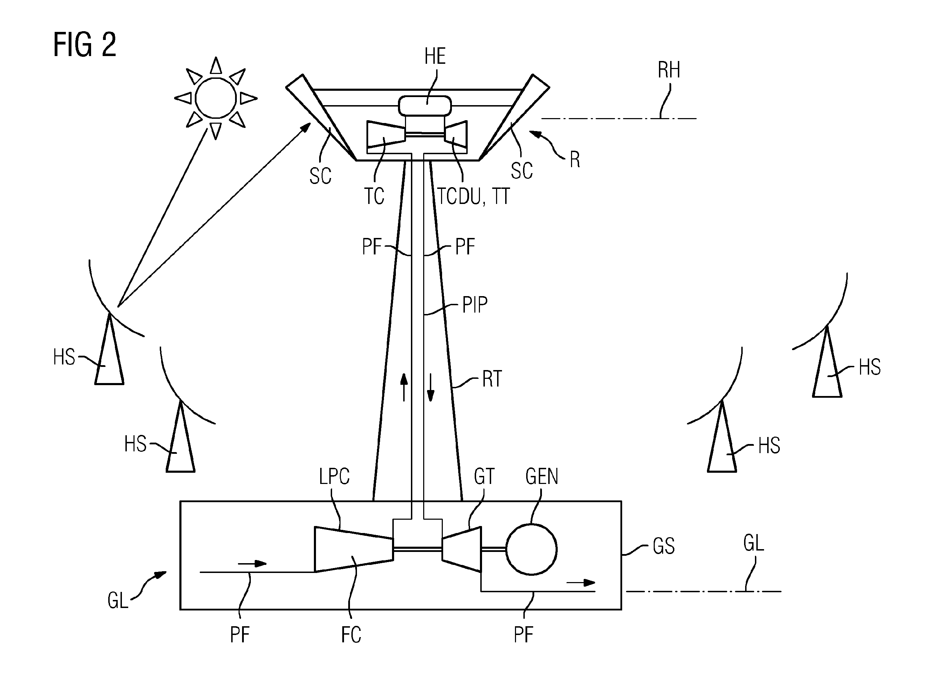

As depicted in figure 2 said process fluid PF enters a ground compressor GC located on ground level GL and is conducted up to - a top compressor TC that further increases the process fluid pressure. Subsequently the process fluid PF is heated in said heat exchanger HE in the receiver R and downstream expanded in a top turbine TT, which is driving said top compressor TC as a driving unit TCDU. Downstream said top turbine a piping conducts said expanded process fluid to said ground turbine GT, where said process fluid PF is further expanded and driving said ground turbine GT, which drives said generator GEN.

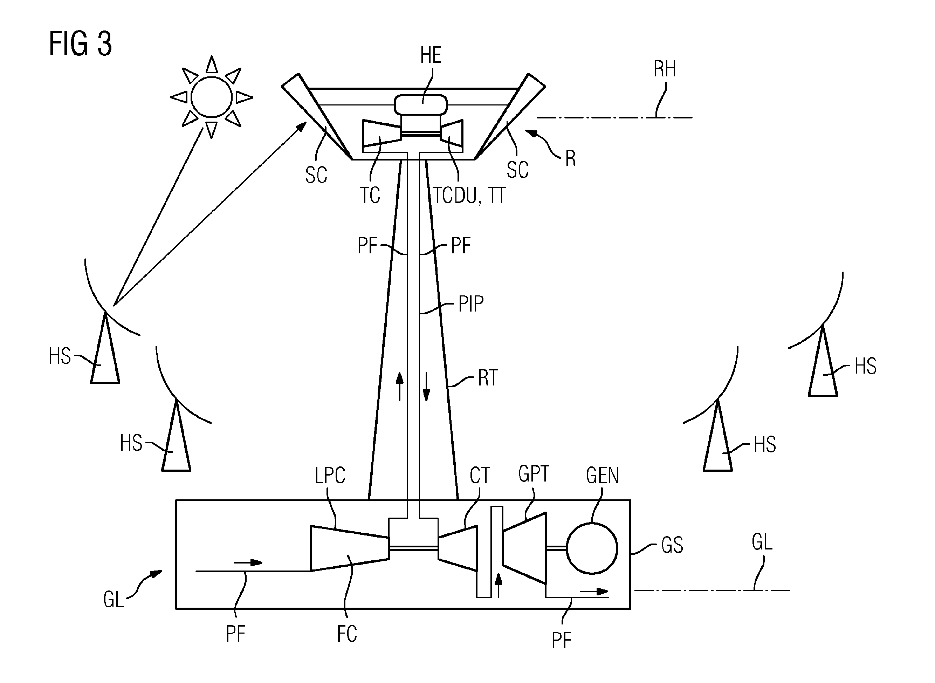

Another embodiment is shown is figure 3, where said ground turbine GT is split into a compressor ground turbine CGT driving ground compressor GC and in a ground power turbine GPT - respectively ground turbine GT - driving said generator GEN. This arrangement enables different speeds for said ground compressor GC and said generator GEN enabling more flexibility.

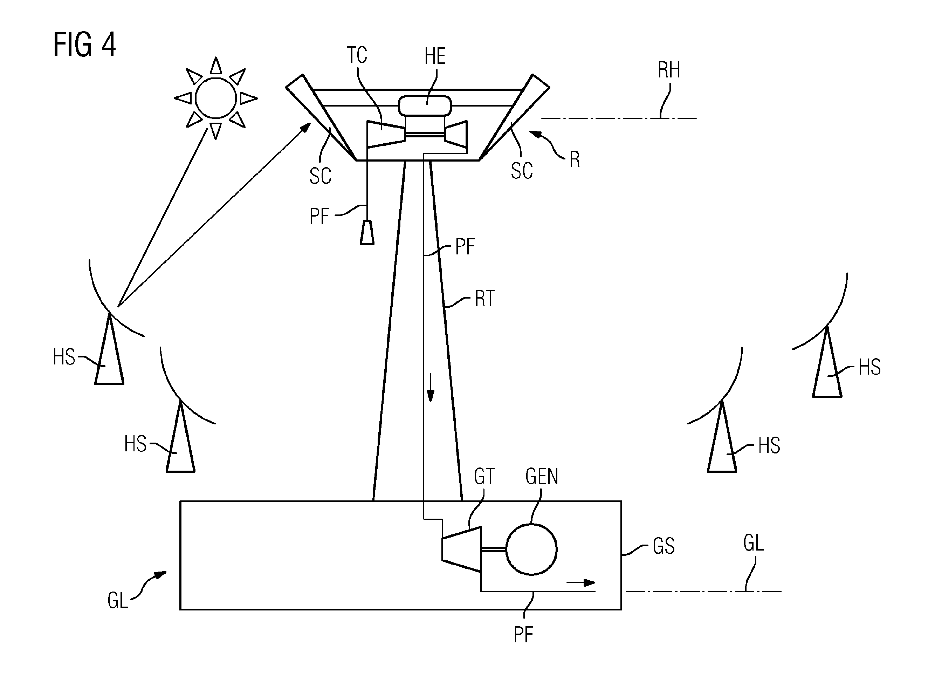

In the embodiment shown in figure 4 the compression is totally done by said top compressor TC without an upstream low pressure compressor respectively first compressor FC. This simplifies the overall layout but increases the mass in the receiver R. However, since the generator GEN is on ground level GL, the mass off the receiver R is significantly reduced.

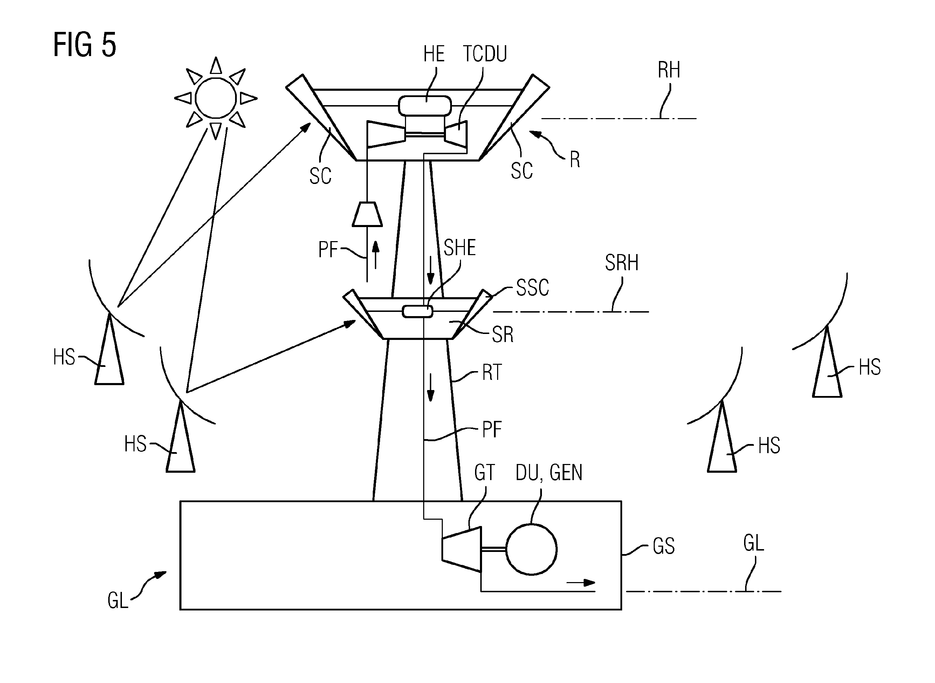

The embodiment shown in figure 5 shows the possibility to provide a second receiver SR to the receiving tower RT, wherein said second receiver SR is attached to said receiving tower RT at a second receiving height SRH above ground level GL and below said receiving height RH of said receiver R. The second receiver SR basically comprises the same components as said receiver R, namely second solar collectors SSC, wherein said second solar collectors SSC comprising a second heat exchanger SHE exchanging heat with said process fluid PF after said process fluid PF was expanded in said top turbine TT and before entering turbines on ground level GL.

## Claims

1. Arrangement for concentrated solar power energy conversion comprising a
- receiving tower (RT) founded on a ground level (GL),
- at least one receiver (R) attached to said receiving tower (RT) in a receiving height (RH) above said ground level (GL),
- further comprising at least one ground station (GS) positioned on ground level (GL),
- wherein said receiver (R) comprises at least one solar collector (SC) made to receive concentrated sunlight,
- wherein said solar collector (SC) comprises a heat exchanger (HE) exchanging heat with a process fluid (PF) to be heated up,
**characterized in that**
said receiver comprises at least one top compressor (TC) to compress said process fluid (PF) before it enters said heat exchanger (HE),
wherein said receiver comprises at least one top compressor driving unit (TCDU) driving said top compressor (TC),
wherein said ground station (GS) comprises at least one ground turbine (GT) driving a driven unit (DU), wherein said ground station (GS) receives said process fluid (PF) from said receiver (R) to be expanded in said ground turbine (GT).

2. Arrangement according to claim 1,
wherein said top compressor driving unit (TCDU) is a top turbine (TT) expanding said process fluid (PF) before said process fluid (PF) enters said ground turbine (GT).

3. Arrangement according to claim 1 or 2,
wherein said driving unit is an electric generator (GEN).

4. Arrangement according to at least one of the preceding claims 1 to 3,
wherein said ground station comprises a first compressor (FC) compressing said process fluid (PF) before it enters said top compressor (TC).

5. Arrangement according to claim 4,
wherein said first compressor (FC) is driven by said ground turbine (GT).

6. Arrangement according to claim 2,
wherein said receiving tower (RT) comprises a second receiver (SR) attached to said receiving tower (RT) at a second receiving height (SRH) above ground level (GL) comprising at least one second solar collector (SSC), wherein said second solar collector (SSC) comprises a second heat exchanger (SHE) exchanging heat with said process fluid (PF) downstream said expansion in said top turbine (TT).

7. Arrangement according to at least one of the preceding claims,
wherein said ground turbine (GT) is a gas turbine and said process fluid is an oxygen containing gas.

8. Arrangement according to at least one of the preceding claims 2 and 7,
wherein said top turbine (TT) is a gas turbine.
